# FASCICULE DE BREVET EUROPEEN

(11) **EP 0 475 839 B1**
(45) Date de publication et mention de la délivrance du brevet: **26.07.1995**
(21) Numéro de dépôt: 91402415.3
(22) Date de dépôt: 10.09.1991
(51) Int. Cl.: A01C 11/02

(54) **Perfectionnement au système de plantation pour planteuse**
Pflanzungssystem für eine Pflanzmaschine
Planting system for a planter

(30) Priorité: 11.09.1990 FR 9011352
(43) Date de publication de la demande: 18.03.1992
(73) Titulaire: REGERO, Société Anonyme dite:, F-44084 Nantes Cedex (FR)
(72) Inventeur: Avril, Michel, F-44980 Ste-Luce sur Loire (FR); Guichon, Gildas, F-44000 Nantes (FR); Pogu, Christian, F-44120 Basse Goulaine (FR)
(74) Mandataire: Phélip, Bruno

(56) Documents cités:
- EP-A- 0 062 917
- GB-A- 1 219 366
- GB-A- 2 114 413
- NL-A- 7 713 803
- US-A- 4 289 080

## Description

La présente invention concerne un perfectionnement au système de plantation de mottes du type cubique, pour les planteuses de plants en mottes. Elle concerne également la planteuse comportant ces systèmes de plantation.

L'invention est plus particulièrement adaptée à la plantation des mottes cultivées sous forme de plaques, lesquelles mottes se présentent en lignes et en rangées sur ladite plaque, prédécoupées, séparées ou non.

La plantation mécanique de ce type de mottes est courante. Cependant les cadences de plantation restent limitées du fait de l'utilisation de mécanismes à mouvement alternatif, saccadé ; la précision de la mise en terre des mottes, bien souvent liée à la précision des mécanismes, est perfectible.

Un mécanisme de ce genre est notamment décrit dans le document EP-A-0 062 917.

Il est également connu de planter des mottes sans utiliser de mécanisme de mise en terre. Dans le document GB-A-1 219 366, les mottes sont mises en terre par simple gravité, guidées par un conduit vertical qui est alimenté par un tapis transporteur horizontal situé à sa partie supérieure.

Une autre machine, décrite dans le document GB-A-2 114 413, qui divulgue le préambule de la revendication 1, réalise la plantation de mottes particulières, dénommées généralement "paper pot". Les mottes de terre sont en effet enserrées dans du papier, et forme une sorte de chapelet.

La machine comporte un tapis sur lequel le chapelet de mottes forme une plaque. Le chapelet file ensuite vers le dispositif de mise en terre, en circulant dans une sorte de goulotte dont la partie inférieure est munie de moyens de séparation des mottes.

Cette séparation s'effectue en coopération avec les pinces du dispositif de mise en terre qui, dans un premier temps font avancer le chapelet par traction puis déchirent la bande de papier qui relie la motte prise en pinces et celle qui est retenue à la partie inférieure de la goulotte.

La présente invention propose un système de plantation plus particulièrement adapté à des mottes cubiques formées dans une plaque généralement prédécoupée. Ce système de plantation permet d'améliorer sensiblement les cadences grâce, notamment, à des mécanismes à mouvement rotatif uniforme, régulier, qui permettent aussi d'améliorer la précision de ces mouvements et en particulier leur synchronisation. Ces perfectionnements, au niveau de la précision, permettent d'améliorer la prise en charge de la motte ; les risques de détérioration sont diminués et, par la suite, au moment de la mise en terre, le positionnement de la motte dans l'emplacement qui lui a été réservé est nettement meilleur.

La présente invention permet encore d'améliorer le mode de plantation en réalisant par exemple des plantations de mottes en quinconce, c'est-à-dire avec un décalage des rangées les unes par rapport aux autres.

Le système de plantation de mottes selon l'invention comporte une goulotte d'amenée d'une rangée de mottes prédécoupées les unes par rapport aux autres ; les mottes sont séparées ou non sur la rangée, la goulotte comprend de préférence une partie amont munie d'un tapis transporteur sans fin, suivie d'une partie aval munie d'un toboggan. L'ensemble est disposé incliné dans un plan parallèle au sens d'avancement. Ce système comporte : - des moyens d'immobilisation temporaire de la première motte, en bout de la goulotte, et des moyens de retenue temporaire de la deuxième motte au moins, - des moyens de préhension et de séparation de la première motte pour sa mise en terre, - des moyens mécaniques rotatifs qui réalisent une commande coordonnée desdits moyens d'immobilisation et de retenue des mottes, - des moyens de synchronisation des mouvements desdits moyens rotatifs de commande et desdits moyens de préhension-séparation ; le tapis transporteur et le toboggan distributeur sont constitués de manière que les mottes situées dans la goulotte tendent à progresser en permanence vers l'extrémité de ladite goulotte par l'action du tapis transporteur.

Selon une autre disposition de l'invention, les moyens de commande sont constitués de plusieurs cames ou d'une came à double fonction qui comporte deux types de profil :
- un profil pour réaliser un mouvement dans un plan radial, qui permet de commander les moyens d'immobilisation des mottes en bout de la goulotte,
- et un profil pour réaliser un mouvement axial qui permet de commander les moyens de retenue des mottes à partir de la deuxième ; lesdits profils sont calés l'un par rapport à l'autre de façon à retenir les mottes à partir de la deuxième lorsque les moyens d'immobilisation de la première motte sont en position escamotée.

Selon une autre disposition préférentielle de l'invention, les moyens de synchronisation des mouvements de la came double fonction et des moyens de préhension et de séparation des mottes, sont constitués d'un train d'engrenages de rapport approprié.

Toujours selon l'invention, les moyens de préhension, séparation et de mise en terre des mottes, sont constitués de paires de pinces en forme de lames flexibles assemblées sur un arbre rotatif dont l'axe est perpendiculaire au sens d'avancement et situé dans un plan perpendiculaire à l'axe du mouvement des mottes dans la goulotte, passant par le centre de la première motte, lesquelles pinces sont soumises à l'action d'organes en forme de guides, qui réalisent une convergence des pinces pour serrer la première motte avant l'escamotage des moyens d'immobilisation, et lâcher en terre cette motte, sensiblement à la verticale, après l'escamotage desdits moyens d'immobilisation.

Selon une autre disposition préférentielle de l'invention, la came double fonction est montée sur l'arbre moteur du tambour d'extrémité aval du tapis transporteur de la goulotte, entraînée par cet arbre, qui est lui-même entraîné au moyen d'un organe roulant sur le sol, lequel organe règle le pas de plantation au moyen d'un jeu de pignons intermédiaires.

Toujours selon l'invention, la came double fonction comporte des profils doubles, de chaque type ; les paires de pinces sont au nombre de huit et elles tournent en sens inverse de celui de la came double, au moyen du train d'engrenage, lequel train réalise un rapport de réduction entre ladite came et l'arbre porteur desdites pinces.

Selon une autre disposition préférentielle de l'invention, les moyens d'immobilisation de la première motte consistent en une butée en forme de levier basculant, articulé sous l'extrémité aval du toboggan, lequel levier est relié par une tige, à un basculeur articulé autour d'un axe parallèle à l'axe de la came, lequel basculeur comporte une roulette en contact avec le profil radial de ladite came ; un moyen de rappel en forme de ressort maintient ladite butée en position active d'immobilisation de la première motte.

Toujours selon l'invention, et selon une autre disposition préférentielle, les moyens de retenue des mottes à partir de la deuxième motte au moins, consistent en une lame flexible formant une paroi latérale de la partie aval de la goulotte, laquelle lame est pressée de façon élastique au moyen d'un levier qui est articulé autour d'un axe sensiblement vertical et qui comporte, à son extrémité côté came, une roulette en contact avec le profil axial de ladite came ; le levier est associé à un organe de rappel élastique qui maintient la roulette en contact avec la came.

Selon une autre disposition de l'invention, l'autre paroi latérale de la partie aval de la goulotte opposée à celle comportant la lame flexible, est réglable transversalement, pour permettre une réduction de la largeur de ladite goulotte, en fonction de la dimension des mottes, de façon à conserver une pression suffisante au niveau de la lame flexible pour retenir les mottes dans la goulotte.

L'invention concerne également une planteuse comportant des systèmes de plantation et en particulier plusieurs systèmes de plantation disposés côte à côte et dont les moyens de mise en terre peuvent être décalés angulairement pour réaliser notamment une plantation en quinconce.

L'invention sera encore illustrée à l'aide de la description suivante d'un mode de réalisation, et des dessins annexés, donnés à titre indicatif, et dans lesquels :
- la figure 1 est une vue schématique en perspective d'un système de plantation des mottes selon l'invention ;
- la figure 2 est une vue partielle, en perspective, de la goulotte permettant de canaliser les plants en mottes ;
- la figure 3 est une vue de dessus du système de plantation des mottes, sans les moyens d'immobilisation de la première motte ;
- la figure 4 est une vue de côté du système de plantation des mottes, sans les moyens de retenue des mottes à partir de la deuxième motte.

Le système de plantation représenté sur les figures fait partie d'une planteuse, non représentée d'une manière générale. Cette planteuse réalise la mise en terre de mottes 1 qui sont, à l'origine, introduites sous forme de rangées, sur un tapis transporteur sans fin 2. Les mottes 1 peuvent être séparées les unes des autres ou faire partie d'un bloc longitudinal muni d'amorces de rupture ; dans ce dernier cas, les moyens de préhension des mottes, décrits ci-après, servent également à les séparer par traction. Cette mise en place sur le tapis 2 s'effectue manuellement ou automatiquement comme par exemple décrit dans le document FR-A-2 492 216.

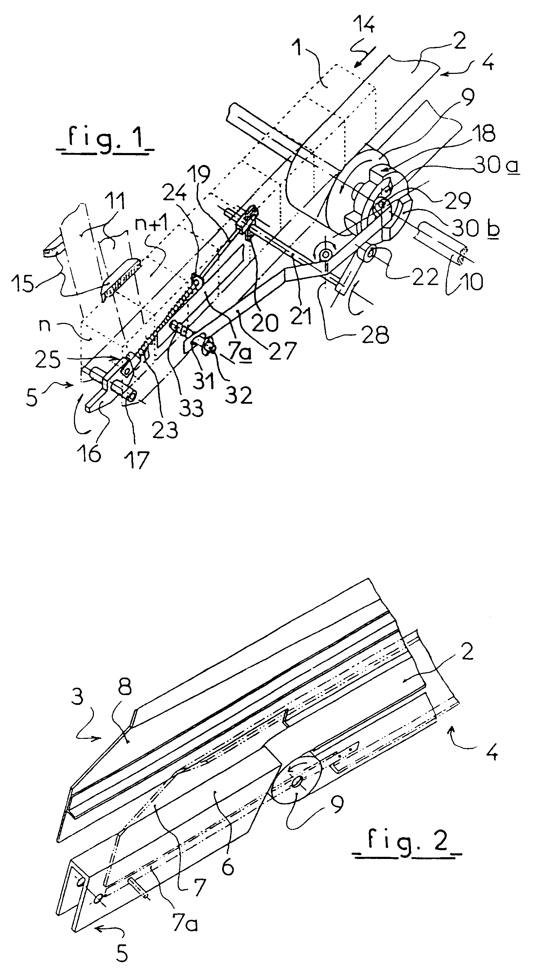

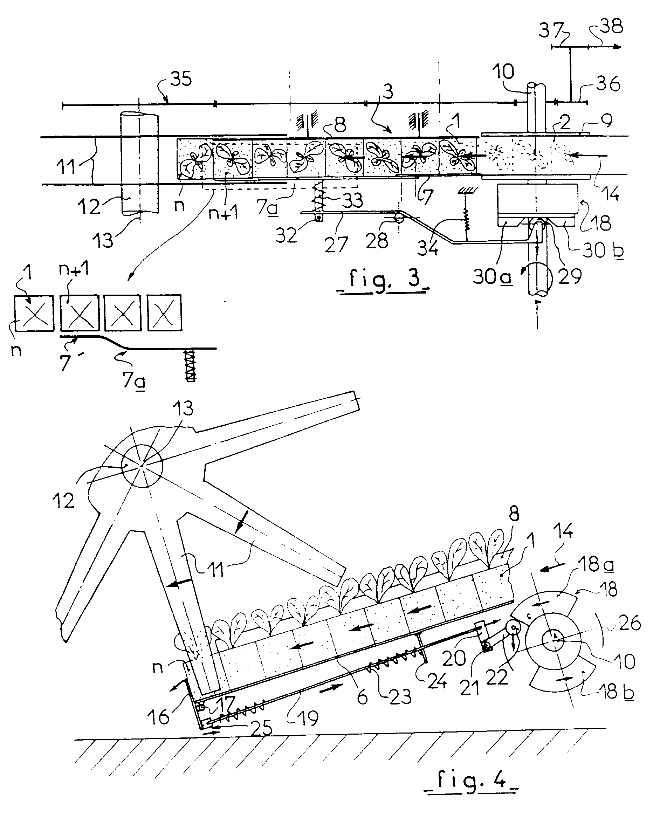

La rangée de mottes 1 est disposée dans une sorte de goulotte inclinée 3 détaillée figure 2. Cette goulotte 3 comporte une partie amont 4 constituée par le tapis transporteur 2, une partie aval 5, constituée principalement d'un toboggan distributeur 6, situé dans le prolongement dudit tapis 2, et deux parois latérales 7 et 8. L'extrémité aval du tapis 2 est disposée sur un tambour 9 entraîné par l'intermédiaire d'un arbre 10. Cet arbre 10 est entraîné par des moyens schématisés figure 3, et dont il sera question plus loin.

Les mottes 1 sont prélevées une à une à l'extrémité aval 5 de la goulotte 3, en bout du toboggan 6, au moyen de pinces 11 solidaires d'un arbre 12 qui tourne autour d'un axe 13 perpendiculaire au sens d'avancement des mottes 1, lequel sens d'avancement est représenté par la flèche 14. On remarque en fait que l'axe 13 se situe dans un plan qui est perpendiculaire au sens d'avancement des mottes 1 ; ce plan passe également sensiblement par le milieu de la première motte "n" située à l'extrémité du toboggan 6.

On remarque encore que l'arbre 12 porte huit paires de pinces 11.

On a représenté, de façon schématique, figure 1, les pinces 11 et les guides ou cames 15, qui servent à resserrer les pinces 11 sur la première motte "n" lors de sa séparation des autres mottes et de son extraction de la goulotte 3. Ces guides 15 libèrent les pinces 11 et, par voie de conséquence, la motte "n", lorsque cette dernière est sensiblement à la verticale, sortie de la goulotte.

Les pinces 11 se présentent sous la forme de lames de métal, flexibles, et leur écartement normal est supérieur à la largeur de la rangée de mottes.

La première motte de la rangée, c'est-à-dire la motte "n" est immobilisée à l'extrémité aval du toboggan 6 au moyen d'un dispositif d'immobilisation constitué d'une butée 16 en forme de levier escamotable. Cette butée 16 est articulée autour d'un axe 17 disposé sous l'extrémité du toboggan 6. Cet axe 17 est un axe transversal, sensiblement horizontal, perpendiculaire au sens d'avancement 14 des mottes 1.

Le mouvement de cette butée 16 est commandé au moyen d'une came 18 comportant, dans l'exemple représenté, un double profil radial 18a et 18b. Pour un tour de la came 18, la butée 16 effectue deux fois son mouvement. Ce mouvement de la butée 16 est obtenu au moyen d'une tige 19 interposée entre l'extrémité inférieure de ladite butée, sous l'axe 17, et un basculeur 20 articulé autour d'un axe 21 sensiblement horizontal, parallèle à l'axe de la came 18. Dans d'autres modes de réalisation, ce mouvement peut être obtenu au moyen de plusieurs cames simples de profil adapté.

Le basculeur 20 comporte, à son extrémité, du côté de la came, une roulette 22 en contact avec les profils 18a et 18b de la came. Un organe élastique 23, en forme de ressort, maintient la butée 16 en position active d'immobilisation de la première motte "n" en bout du toboggan 6. Ce ressort 23 est interposé entre un appui 24 solidaire du toboggan 6 et l'extrémité 25 de la butée 16.

On remarque encore, représentés seulement sur la figure 4, des moyens de retenue 26 aménagés sur la came 18, pour guider la roulette 22 et empêcher le mouvement de la butée 16 sous l'effet de la pression des mottes 1 dans la goulotte 3. Ces moyens 26 consistent en une contre-came en forme d'arc de cercle centré sur l'axe de la came 18.

La came 18 tourne, comme représentée figure 4, dans le sens inverse des aiguilles d'une montre. Les profils 18a et 18b sont identiques ; ils réalisent un mouvement radial de la roulette 22. Ce mouvement de la roulette 22, autour de l'axe 21, permet le basculement et l'escamotage de la butée 16 en bout du toboggan 6.

Le basculeur 20 apparaît plus en détail figure 1. Il comporte en fait un axe 21 transversal horizontal qui déporte la roulette 22 pour l'amener au niveau des profils 18a et 18b alors que la tige 19 est centrée sous la goulotte 3.

Les cames 18a et 18b se présentent sous la forme de secteurs d'anneaux et provoquent un entraînement vers le bas de la roulette 22 avec un maintien dans cette position sur une portion de cercle inférieure à un quart de tour.

La came 18 est centrée et solidaire de l'arbre 10 du tambour 9.

La came 18 est en fait une came à double fonction. Elle réalise le mouvement des moyens d'immobilisation de la première motte "n", grâce à la butée 16 et le mouvement des moyens de retenue des mottes à partir de la deuxième motte.

Les moyens de retenue des mottes, à partir de la deuxième, repérée "n + 1" sur les figures 1, 3 et 4, sont constitués par une structure 7a faisant partie de la paroi 7 de la goulotte 3, ou solidarisée à cette paroi 7 par tout moyen approprié tels que des rivets. Cette structure 7a est en forme de lame flexible et mobile ; elle est disposée au niveau de l'extrémité amont de la paroi 7, par exemple dans une découpe réalisée sur la partie inférieure de ladite paroi, figure 2. La lame flexible 7a permet de presser au moins une partie de la rangée de mottes 1 à partir de la motte n + 1, au moyen d'un levier 27 articulé autour d'un axe vertical 28 qui est disposé sensiblement au milieu dudit levier 27. L'extrémité du levier 27 comporte, du côté de la came 18, une roulette 29 en contact avec les profils 30a et 30b de la came 18. L'autre extrémité du levier 27 comporte une lumière 31 autour d'un guide 32 qui est solidaire de la lame 7a. Un organe élastique en forme de ressort 33 est interposé, autour du guide 32, entre la lame 7a et l'extrémité du levier 27, pour appliquer la pression sur la lame 7a, de façon élastique, laquelle pression résulte du mouvement de la roulette 29 sur les profils 30a et 30b de la came 18. Un autre organe élastique 34, visible figure 3, maintient le levier 27 et en particulier la roulette 29 en appui sur la came 18. Cet organe élastique 34, en forme de ressort, est ancré sur le levier 27, entre son articulation 28 et la roulette 29.

Les profils 30a et 30b sont identiques et réalisent un mouvement axial de la roulette 29 c'est-à-dire un mouvement parallèle à l'axe de la came 18. On remarque que ces profils 30a et 30b sont disposés sur le côté de la came 18, séparés du tambour 9 par les profils 18a et 18b.

On a représenté, en détail encadré, la lame 7a et en particulier son extrémité aval. Cette extrémité 7′ est déportée vers la rangée de mottes sur une longueur inférieure ou égale à la longueur d'une motte pour appliquer la pression sur la motte "n + 1" de façon préférentielle ; la forme de la lame 7a s'apparente à celle d'une baïonnette et on évite ainsi les problèmes de largeur variable des mottes. De préférence, la lame 7a est disposée légèrement au-dessus du plan du toboggan 6 ; elle peut éventuellement être inclinée selon un angle ouvert par rapport à ce plan ; ceci évite les coincements des mottes lorsqu'elles présentent des irrégularités à la base inférieure (présence de talons par exemple).

La paroi 8 du toboggan 6 est réglable, transversalement, par rapport au sens d'avancement 14 des mottes, pour permettre d'adapter la largeur de la goulotte à celle des mottes et maintenir, grâce à la lame 7a, une pression de retenue suffisante sur les mottes à partir de la motte "n + 1".

L'arbre 12 portant des pinces 11 est entraîné en rotation au moyen d'un train d'engrenages 35 comportant, comme représenté schématiquement figure 3, des roues d'engrenages interposées entre ledit arbre 12 et l'arbre 10 sur lequel est monté le tambour 9 du tapis transporteur 2 et la came 18 à double fonction. Ce train d'engrenage 35 permet une inversion du sens de rotation de la came 18 par rapport au sens de rotation des pinces 11. En effet les pinces 11 tournent, figure 4, dans le sens des aiguilles d'une montre.

Le train d'engrenage 35 réalise également une réduction du nombre de tours entre la came 18 et les pinces 11. Ce rapport de réduction est, dans l'exemple représenté, égal à quatre, compte-tenu des profils doubles sur la came 18 et du nombre de pinces 11, huit dans les dessins.

On a également représenté, de façon schématique, le pignon 36 d'entraînement du mécanisme de plantation. Ce pignon 36 est par exemple entraîné au moyen d'une roue dentée 37 et d'une chaîne 38, au moyen d'un organe rotatif, du type rouleau ou roue, non représenté, en contact avec le sol. Cet organe rotatif définit, avec les transmissions choisies, le pas de plantation des mottes.

Dans l'exemple de réalisation représenté, le tapis transporteur 2 est entraîné en continu. Si cela s'avère nécessaire, en fonction des produits traités et notamment pour des problèmes de friabilité des mottes poussées contre la butée 16, on peut prévoir d'adapter des moyens d'avancement du tapis 2 au coup par coup. Cet avancement, par intermittence, sera adapté selon les dimensions des mottes et le débit de la machine.

On peut par exemple prévoir un tambour 9 monté fou sur l'arbre 10, et, à l'autre extrémité du tapis 2, un arbre d'entraînement commandé au moyen d'un système de chaînes et de pignons par l'intermédiaire d'un système du type à rochet pour la rotation des poulies et donc du tapis, au coup par coup.

Sur une même planteuse, on peut disposer, côte à côte, plusieurs systèmes de plantation des mottes. Par un décalage angulaire des cames 18 et des pinces 11, on peut réaliser une plantation en quinconce des mottes.

Les signes de référence insérés après les caractéristiques techniques mentionnées dans les revendications ont pour seul but de faciliter la compréhension de ces dernières et n'en limitent aucunement la portée.

## Revendications

1. Système de plantation de mottes, notamment pour planteuse de plants en mottes prédécoupées, lequel système est du type comportant :
- une goulotte (3) d'amenée d'une rangée de mottes (1), séparées ou non,
- des moyens d'immobilisation temporaire (16) de la première motte (n) à être plantée, disposés en bout de la goulotte (3),
- des moyens de retenue (7a) des mottes à partir de la deuxième motte (n + 1),
- des moyens de préhension et de séparation (11) de ladite première motte (n),
- des moyens rotatifs (18) pour la commande coordonnée desdits moyens d'immobilisation (16) et de retenue (7a),
- et des moyens de synchronisation (35) des mouvements desdits moyens rotatifs (18) de commande et desdits moyens de préhension et de séparation (11), ladite goulotte (3) comprend une partie amont (4) constituée d'un tapis transporteur sans fin (2) entraîné en continu, suivie d'une partie aval (5) constituée d'un toboggan distributeur (6), caractérisé en ce que le tapis transporteur (2) et le toboggan distributeur (6) sont constitués de manière que les mottes situées dans la goulotte (3) tendent à progresser en permanence vers l'extrémité de ladite goulotte par l'action du tapis transporteur (2).

2. Système de plantation de mottes selon la revendication 1, caractérisé en ce qu'il comporte des moyens rotatifs de commande constitués de plusieurs cames ou d'une came (18) double fonction qui comporte deux types de profils :
- un profil pour réaliser un mouvement dans un plan radial, servant à animer les moyens d'immobilisation (16) de la première motte (n),
- et un profit pour réaliser un mouvement transversal axial servant à animer les moyens de retenue (7a) des mottes à partir de la seconde, lesquels profits sont calés l'un par rapport à l'autre, de façon à mettre en action les moyens de retenue (7a) des mottes à partir de la seconde motte (n + 1), avant que les moyens d'immobilisation (16) de la motte (n) soient escamotés.

3. Système de plantation de mottes selon la revendication 2, caractérisé en ce qu'il comporte des moyens de synchronisation des mouvements entre la came (18) et les moyens de préhension et de séparation (11) des mottes, constitués d'un train d'engrenages (35) dont le rapport de réduction est approprié.

4. Système de plantation de mottes selon l'une quelconque des revendications 1 à 3, caractérisé en ce qu'il comporte des moyens de préhension et de séparation (11) de ta première motte (n), constitués de paires de pinces (11) en forme de lames flexibles en métal, assemblées sur un arbre rotatif (12) qui est situé sensiblement dans un plan perpendiculaire au sens d'avancement des mottes dans la goulotte (3), passant sensiblement par le centre de la première motte (n), lesquels bras sont soumis à l'action d'un guide (15) pour pincer ladite première motte avant l'escamotage des moyens d'immobilisation (16), séparer et sortir ladite première motte de la goulotte (3) après l'escamotage desdits moyens d'immobilisation (16), et pour libérer ladite première motte sensiblement à la verticale.

5. Système de plantation de mottes selon la revendication 1, caractérisé en ce que les moyens rotatifs à came (18) de commande coordonnée, sont calés sur l'arbre (10) qui est porteur du tambour (9) situé à l'extrémité aval du tapis transporteur (2).

6. Système de plantation de mottes selon la revendication 5, caractérisé en ce qu'il comporte une came (18) double fonction tournant en sens inverse de la roue de dépose à pinces (11), par l'intermédiaire du train d'engrenages (35), lequel réalise un rapport de réduction entre l'arbre (10) de la came (18) et l'arbre (12) porteur des pinces (11).

7. Système de plantation de mottes selon l'une quelconque des revendications 1 à 6, caractérisé en ce qu'il comporte des moyens d'immobilisation de la première motte (n), constitués d'une butée (16) en forme de levier basculant articulé transversalement sous l'extrémité du toboggan distributeur (6), lequel levier est relié, par une tige (19), à un basculeur (20) articulé autour d'un axe parallèle à l'axe de la came (18), lequel basculeur (20) comporte une roulette (22) en contact avec le profil radial (18a, 18b) de ladite came (18) ; des moyens de rappel en forme de ressort (23) maintiennent la butée (16) en position active d'immobilisation de la première motte (n).

8. Système de plantation de mottes selon la revendication 7, caractérisé en ce qu'il comporte des moyens de retenue des mottes à partir de la deuxième motte (n + 1), constitués d'une lame (7a), mobile, fixée sur le côté (7) formant une paroi de la partie aval (5) de la goulotte, laquelle lame (7a) est pressée de façon étastique, au moyen d'un levier (27) articulé autour d'un axe sensiblement vertical (28) et qui comporte, à son extrémité côté came (18), une roulette (29) maintenue en contact par le ressort (34) avec le profit axial (30a, 30b) de ladite came (18).

9. Système de plantation de mottes selon l'une quelconque des revendications 1 à 8, caractérisé en ce que la partie aval (5) de la goulotte (3) comporte, à l'opposé de la lame (7a), une paroi (8) réglable transversalement pour permettre une réduction de la largeur de ladite goulotte (3) en fonction de la taille des mottes, de façon à conserver une pression suffisante de retenue des mottes à partir de la seconde motte (n + 1).

10. Système de plantation de mottes selon la revendication 7, caractérisé en ce que la came (18) comporte des moyens de retenue (26) aménagés pour guider la roulette (22) et empêcher le mouvement de la butée (16) sous l'effet de la première des mottes.

11. Planteuse de plants en mottes caractérisée en ce qu'elle comporte des systèmes de plantation de mottes selon l'une quelconque des revendications 1 à 10, lesquels systèmes sont disposés côte à côte et sont décalés l'un par rapport à l'autre angulairement, au niveau des moyens de plantations, pour réaliser une plantation des mottes en terre en quinconce.

## Claims

1. Block planting system, particularly for precut block seedling planter, said system comprising :
- a conveying hopper for a separated or not separated block row (1),
- temporary standstill means (16) of the first block (n) to be planted, provided at the end of the hopper (3),
- block holding means (7a) from the second block (n+1),
- separating and gripping means (11) of said first block (n),
- rotary means (18) for the suitable control of said standstill means (16) and said holding means (7a),
- and movement synchronization means (35) of said control rotary means (18) and said separating and gripping means (11), said hopper (3) having an upstream part (4) comprising an endless conveyor (2) continously running, followed by a downstream part (5) comprising a supplying toboggan (6), characterized in that the conveyor (2) and the supplying toboggan (6) are such that the blocks located in the hopper (3) progressively run continously towards the end of said hopper by the action of the conveyor (2).

2. Block planting system according to claim 1, characterized in that it comprises control rotary means having several cams or a double acting cam (18) having two types of profiles :
- a profile to make a radial plan movement allowing to move the standstill means (16) of the first block (n)
- and a profile to make an axial transverse movement allowing to move the block holding means (7a) from the second block, said profiles are provided one to another in order to drive the block holding means (7a) from the second block (n+1) before retraction of the standstill means (16) of the block (n).

3. Block planting system according to claim 2, characterized in that it comprises movement synchronization means between the cam (18) and the block separating and gripping means (11) comprising gear train (35) with a suitable reduction ratio.

4. Block planting system according to any one of claims 1 to 3, characterized in that it comprises separating and gripping means (11) of the first block (n) having pairs of tongs (11) in the shape of metal flexible blades mounted on a rotary shaft (12) which is located essentially in a plane orthogonal to the moving direction of the blocks in the hopper (3) and running essentially through the center of the first block (n), said arms are subjected to the action of a guide (15) to nip said first block before retraction of the standstill means (16), to separate and to remove said first block from the hopper (3) after retraction of said standstill means (16) and to release said first block essentially vertically.

5. Block planting system according to claim 1, characterized in that the cam rotary means (18) with control action are provided on the shaft (10) bearing the drum (9) located at the downstream end of the conveyor (2).

6. Block planting system according to claim 5, characterized in that it comprises a double acting cam (18) rotating in a reverse direction of the tong laying wheel (11) via gear train (35) providing a reduction ratio between the shaft (10) of the cam (18) and the shaft (12) bearing the tongs (11).

7. Block planting system according to any one of claims 1 to 6, characterized in that it comprises standstill means of the first block (n) comprising a stop (16) in the shape of a rocking lever transversaly hinged under the end of the supplying toboggan (6), said lever is connected via a rod (19) to a rocking device (20) hinged around a shaft parallel to the cam shaft (18) said rocking device (20) comprising a roller (22) engaged with the radial profile (18a, 18b) of said cam (18) ; adjusting means in the shape of spring (23) holding the stop (16) in the standstill active position of the first block (n).

8. Block planting system according to claim 7, characterized in that it comprises block holding means from the second block (n+1) comprising a mobile blade (7a) fixed on the side (7) forming a wall of the downstream part (5) of the hopper, said blade (7a) is resilient pushed by means of a lever (27) hinged around an essentially vertical shaft (28) and having at the end thereof on the cam side (18) a roller (29) engaged by the spring (34) with the axial profile (30a, 30b) of said cam (18).

9. Block planting system according to any one of claims 1 to 8, characterized in that the downstream part (5) of the hopper (3) comprises in opposition to the blade (7a) a wall (8) transversaly adjustable to allow a reduction of the width of said hopper (3) according to the size of the blocks in order to maintain a suitable pressure for holding the blocks from the second block (n+1).

10. Block planting system according to claim 7, characterized in that the cam (18) comprises holding means (26) provided to guide the roller (22) and to prevent movement of the stop (16) under the action of the first of the blocks.

11. Block seedling planter, characterized in that it comprises block planting systems according to any one of claims 1 to 10, said systems are provided side to side and are angularly offset one to another at the level of the planting means to obtain a quincunx block plantation in the earth.

## Patentansprüche

1. Pflanzungssystem für Ballen, insbesondere für Pflanzmaschinen zum Pflanzen von vorgeteilten Ballen, umfassend;
eine Rinne (3) zum Zuführen einer Reihe von geteilten oder nichtgeteilten Ballen (1),
Einrichtungen (16) zum vorübergehenden Anhalten des ersten zu pflanzenden Ballens (n), die an der Spitze der Rinne (3) angeordnet sind,
Einrichtungen zum Zurückhalten (7a) der Ballen ab dem zweiten Ballen (n + 1),
Einrichtungen zum Ergreifen und zum Separieren (11) des genannten ersten Ballens (n),
rotierende Einrichtungen (18) zur koordinierten Steuerung der genannten Einrichtungen zum Anhalten (16) und zum Zurückhalten (7a),
und Einrichtungen zum Synchronisieren (35) der Bewegungen der genannten rotierenden Einrichtungen (18) zum Steuern und der genannten Einrichtungen zum Ergreifen und zum Separieren (11), wobei die besagte Rinne (3) einen stromaufwärtigen Abschnitt (4) aufweist, der aus einem endlosen Transportband (2) besteht, das kontinuierlich angetrieben wird, gefolgt von einem stromabwärtigen Abschnitt (5), bestehend aus einer Verteilrutsche (6), dadurch gekennzeichnet, daß das Transportband (2) und die Verteilrutsche (6) derart ausgebildet sind, daß die in der Rinne (3) angeordneten Ballen dazu neigen, ständig unter der Wirkung des Transportbands (2) auf das Ende dieser Rinne hin sich weiterzubewegen.

2. Pflanzungssystem für Ballen nach Anspruch 1, dadurch gekennzeichnet, daß es rotierende Steuereinrichtungen umfaßt, die aus mehreren Nocken oder einem Nocken (18) mit zwei Funktionen bestehen, der zwei Profiltypen aufweist:
ein Profil zur Erzielung einer Bewegung in einer radialen Ebene, die dazu dient, die Anhaltemittel (16) des ersten Ballens (n) zu betätigen,
und ein Profil zur Erzielung einer transversalen axialen Bewegung, die dazu dient, die Rückhalteeinrichtungen (7a) der Ballen ab dem zweiten Ballen zu betätigen, wobei diese Profile derart gegeneinander verkeilt sind, daß die Rückhalteeinrichtungen (7a) der Ballen ab dem zweiten Ballen (n + 1) betätigt werden, bevor die Anhaltemittel (16) des ersten Ballens (n) eingeklappt werden.

3. Pflanzungssystem für Ballen nach Anspruch 2, dadurch gekennzeichnet, daß es Einrichtungen zur Synchronisierung der Bewegungen zwischen dem Nocken (18) und den Einrichtungen zum Ergreifen und Separieren (11) der Ballen umfaßt, bestehend aus einem Zahnradvorgelege (35) mit einem angepaßten Untersetzungsverhältnis.

4. Pflanzungssystem für Ballen nach einem der Ansprüche 1 bis 3, dadurch gekennzeichnet, daß es Einrichtungen zum Ergreifen und zum Separieren (11) des ersten Ballens (n) umfaßt, bestehend aus Paaren von Klemmzangen (11) in Form von flexiblen Plättchen aus Metall, die auf einer rotierenden Welle (12) angeordnet sind, die ihrerseits im wesentlichen in einer Ebene liegt, die senkrecht zur Bewegungsrichtung der Ballen in der Rinne (3) liegt und im wesentlichen durch die Mitte des ersten Ballens (n) verläuft, wobei die Arme unter der Wirkung einer Führung (15) stehen, um den genannten ersten Ballen vor dem Einklappen der Anhalteeinrichtung (16) zu klemmen, den ersten Ballen in der Rinne (3) zu separieren und aus der Rinne nach dem Einklappen der Anhalteeinrichtung (16) herauszubewegen und um den genannten ersten Ballen in einer im wesentlichen vertikal nach unten hängenden Stellung freizugeben.

5. Pflanzungssystem für Ballen nach Anspruch 1, dadurch gekennzeichnet, daß die rotierenden Nockeneinrichtungen (18) zur koordinierten Steuerung auf der Welle (10) verkeilt sind, die Träger der Trommel (9) am stromabwärtigen Ende des Transportbandes (2) ist.

6. Pflanzungssystem für Ballen nach Anspruch 5, dadurch gekennzeichnet, daß es einen Doppelfunktionsnocken (18) enthält, der sich in der umgekehrten Drehrichtung dreht wie das Rad mit den Klemmzangen (11) durch die Zwischenordnung des Zahnradvorgeleges (35), welches ein Untersetzungsverhältnis zwischen der Welle (10) des Nockens (18) und der Tragwelle (12) der Klemmzangen (11) realisiert.

7. Pflanzungssystem für Ballen nach einem der Ansprüche 1 bis 6, dadurch gekennzeichnet, daß es Mittel zum Anhalten des ersten Ballens (n) umfaßt, die gebildet sind, durch einen Anschlag (16) in Form eines Schwenkhebels, der transversal unter dem Ende der Verteilrutsche (6) angelenkt ist, wobei dieser Hebel durch eine Stange (19) mit einem Kipphebei (20) verbunden ist, der um eine Achse schwenkbar angelenkt ist, die parallel ist zur Achse des Nockens (18), wobei der genannte Kipphebel (20) eine Rolle (22) umfaßt, die in Kontakt steht mit dem radialen Profil (18a, 18b) des besagten Nockens (18), wobei eine Rückstelleinrichtung in Form einer Feder (23) den Anschlag (16) in der aktiven Anhalteposition für den ersten Ballen (n) hält.

8. Pflanzungssystem für Ballen nach Anspruch 7, dadurch gekennzeichnet, daß es Rückhalteeinrichtungen für die Ballen ab dem zweiten Ballen (n + 1) umfaßt, bestehend aus einem beweglichen Plättchen (7a), welches auf der Seite (7) befestigt ist und eine Wand des stromabwärtigen Abschnitts (5) der Rinne bildet, wobei dieses Plättchen (7a) elastisch mittels eines Hebels (27) gedrückt wird, der um eine im wesentlichen vertikale Achse (28) angelenkt ist und der an seinem dem Nocken (18) benachbarten Ende eine Rolle (29) trägt, die durch die Feder (34) in Kontakt mit dem axialen Profil (30a, 30b) des Nockens (18) gehalten wird.

9. Pflanzungssystem für Ballen nach einem der Ansprüche 1 bis 8, dadurch gekennzeichnet, daß der stromabwärtige Abschnitt (5) der Rinne (3) auf der dem Plättchen (7a) abgelegenen Seite eine Wand (8) umfaßt, die transversal verstellbar ist, um eine Reduzierung der Breite der genannten Rinne (3) in Funktion der Abmessungen der Ballen derart zu ermöglichen, daß ein genügender Druck aufrechterhalten wird, um die Ballen ab dem zweiten Ballen (n + 1) zurückzuhalten.

10. Pflanzungssystem für Ballen nach Anspruch 7, dadurch gekennzeichnet, daß der Nocken (18) Rückhalteeinrichtungen (26) umfaßt, die dazu dienen, die Rolle (22) zu führen und die Bewegung des Anschlags (16) unter der Wirkung des ersten Ballens zu verhindern.

11. Pflanzmaschine zum Pflanzen von Ballen, dadurch gekennzeichnet, daß sie Pflanzungssysteme für Ballen nach einem der Ansprüche 1 bis 10 umfaßt, wobei diese Systeme nebeneinander angeordnet und gegeneinander winkelmäßig in der Ebene der Pflanzungsmittel verkeilt sind, um eine zickzackversetzte Einpflanzung der Ballen in den Boden zu realisieren.
